# EUROPEAN PATENT APPLICATION

(11) **EP 4 683 236 A1**
(43) Date of publication of application: **21.01.2026**
(21) Application number: 24188633.2
(22) Date of filing: 15.07.2024
(51) Int. Cl.: H04B 5/48, H01Q 5/335, H04B 1/00, H04B 5/79, H04B 7/06, H04B 7/08

(54) **NFC CIRCUIT SWITCH**

(71) Applicant: STMicroelectronics International N.V., 1228 Plan-les-Ouates, Geneva (CH)
(72) Inventor: PROSSEGGER, Martin, 8010 GRAZ (AT)
(74) Representative: Cabinet Beaumont

(57) **Abstract**

The present disclosure relates to an NFC circuit switch comprising:
- an antenna matching circuit having a first and a second output nodes configured to be coupled to an antenna;
- a first transistor (Q1) coupling a first NFC signal input node (RFO+) and the matching circuit;
- a second transistor (Q5) coupling a second NFC signal input node (RFO-) and the matching circuit;

a controlling node of the first and second transistors being coupled together to a first node, the first node being coupled to a first voltage (K+) rail via a first resistor (R1); and
- a third transistor (Q4) coupling the first node to ground;

the first voltage (K+) absolute value being superior to a maximum voltage present between first and second NFC signal input nodes added to the threshold voltage of the first or second transistors.

## Description

### Technical field

The present disclosure relates generally to near field communication (NFC) circuit switches, NFC systems using NFC circuit switches and their functioning methods.

### Background art

Some NFC applications require the use of several antennae. Nevertheless, implementing several antennae leads to crosstalk and to an increasing design complexity.

### Summary of Invention

There is a need to provide a solution to increase the number of antennae implemented in an NFC circuit without increasing design complexity and crosstalk.

One embodiment addresses all or some of the drawbacks of known NFC circuits.

One embodiment provides an NFC circuit switch comprising:
- an antenna matching circuit having a first and a second output nodes configured to be coupled to an antenna;
- a first transistor coupling a first NFC signal input node and the matching circuit;
- a second transistor coupling a second NFC signal input node and the matching circuit;

a controlling node of the first and second transistors being coupled together to a first node, the first node being coupled to a first voltage rail via a first resistor; and
   - a third transistor coupling the first node to ground;
the first voltage absolute value being superior to a maximum voltage present between first and second NFC signal input nodes added to the threshold voltage of the first or second transistors.

One embodiment provides a functioning method of an NFC circuit switch having an antenna matching circuit having a first and a second output nodes configured to be coupled to an antenna; a first transistor coupling a first NFC signal input node and the matching circuit; a second transistor coupling a second NFC signal input node and the matching circuit, a controlling node of the first and second transistors being coupled together to a first node, the first node being coupled to a first voltage rail via a first resistor; and a third transistor coupling the first node to ground;
the method comprising applying a first voltage, to the first voltage rail, having an absolute value superior to a maximum voltage present between first and second NFC signal input nodes added to the threshold voltage of the first or second transistors.

According to one embodiment, the matching circuit comprises:
- a first capacitor coupling a first conduction node of the first transistor to the first output node;
- a second capacitor coupling the first output node to ground;
- a third capacitor coupling the second output node to ground; and
- a fourth capacitor coupling a first conduction node of the second transistor to the second output node.

According to one embodiment, the NFC circuit switch comprises:
- a fourth transistor coupling the first output node of the matching circuit to ground;
- a fifth transistor coupling the second output node of the matching circuit to ground;
a controlling node of the third, fourth, fifth transistors being coupled together.

According to one embodiment, the maximum voltage present between first and second NFC signal input nodes is around 5 V and the first voltage is above 7 V, preferably above 10 V, for example 12 V.

According to one embodiment, the first and second transistors are NMOS transistors.

According to one embodiment, the third, fourth and fifth transistors are NMOS transistors.

According to one embodiment, a second resistor couples the third transistor to the first node.

According to one embodiment, the controlling node of the first transistor is coupled to the first node via a third resistor.

According to one embodiment, the controlling node of the second transistor is coupled to the first node via a fourth resistor.

One embodiment provides an NFC device comprising:
- one switch as described in the previous paragraphs;
- one antenna coupled to the first and second output nodes of the matching circuit of said switch;
- one voltage supplier configured to supply the first voltage to the first voltage rail;
- one NFC controller configured to supply an NFC signal between the first and second NFC signal input nodes; and
- one switch controller configured to generate a controlling signal on the controlling node of the third transistor.

According to one embodiment, the voltage supplier is a boost converter or a voltage doubling circuit.

One embodiment provides an NFC system comprising:
- a plurality of switches as described in the previous paragraphs;
- a plurality of antennae, each antenna being coupled to the first and second output nodes of the matching circuit of a different switch of the plurality;
- one voltage supplier configured to supply the first voltage to the first voltage rail;
- one NFC controller configured to supply an NFC signal between the first and second NFC signal input nodes of each switches of the plurality ; and
- one switch controller configured to generate respective controlling signals on the controlling node of the third transistor of each switches of the plurality.

According to one embodiment, the number of antennae and switches of the pluralities is superior to 2 and up to 64.

According to one embodiment, the antennae of the plurality are arranged in a matrix.

One embodiment provides a method of use of a switch as described in the previous paragraphs, comprising applying the first voltage to the first voltage rail and controlling the third transistor for it to be in a conductive state, in order to render the first and second transistors to be in a conducting state.

### Brief description of drawings

The foregoing features and advantages, as well as others, will be described in detail in the following description of specific embodiments given by way of illustration and not limitation with reference to the accompanying drawings, in which:
Figure 1 represents schematically an example of an NFC system;
Figure 2 represents schematically with blocks an NFC system according to an embodiment; and
Figure 3 represents a block of the NFC system of Figure 2 according to an embodiment.

### Description of embodiments

Like features have been designated by like references in the various figures. In particular, the structural and/or functional features that are common among the various embodiments may have the same references and may dispose identical structural, dimensional and material properties.

For the sake of clarity, only the operations and elements that are useful for an understanding of the embodiments described herein have been illustrated and described in detail.

Unless indicated otherwise, when reference is made to two elements connected together, this signifies a direct connection without any intermediate elements other than conductors, and when reference is made to two elements coupled together, this signifies that these two elements can be connected or they can be coupled via one or more other elements.

In the following disclosure, unless indicated otherwise, when reference is made to absolute positional qualifiers, such as the terms "front", "back", "top", "bottom", "left", "right", etc., or to relative positional qualifiers, such as the terms "above", "below", "higher", "lower", etc., or to qualifiers of orientation, such as "horizontal", "vertical", etc., reference is made to the orientation shown in the figures.

Unless specified otherwise, the expressions "around", "approximately", "substantially" and "in the order of" signify within 10 % or 10°, and preferably within 5 % or 5°.

Near field communication (NFC) systems use a radio frequency electromagnetic field generated by a device (e. g. terminal or reader) to communicate with another device (e. g. card, tag). One device can operate in reader mode by generating a field intended for another device and in a card emulation mode, also called tag emulation mode, by capturing a field generated by another device. NFC allows short distance communications (less than ten centimeters) between two devices.

In the present description, we consider the case of a system in which at least one of the devices is compatible with NFC technology according to the NFC Forum.

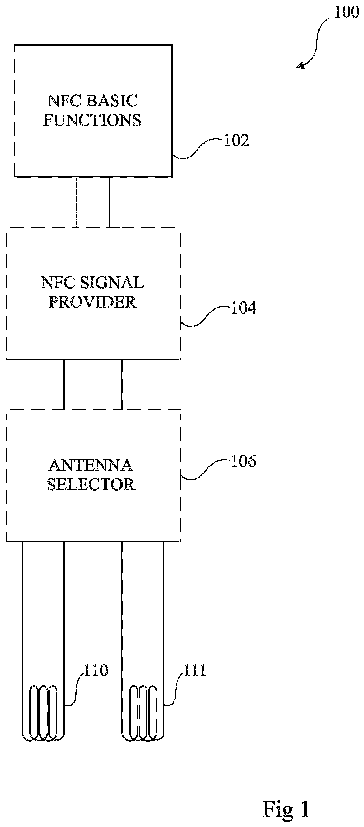

Figure 1 represents schematically an NFC system 100.

In the illustrated example, the NFC system 100 comprises a first block 102 (NFC BASIC FUNCTIONS) whose function is to receive and process an NFC signal for standard NFC operations such as card or tag reading or charging modes operations for example. In an example, the block 102 is a microcontroller. The first block 102 generates for example tasks and data that have to be transmitted.

The first block 102 is coupled to a second block 104 (NFC SIGNAL PROVIDER) wherein the NFC signal is conditioned for providing an NFC alternative 13.56 MHz differential signal between two pins RFO+, RFO-. In an example, blocks 102 and 104 are within a same block or circuit.

In an example, the block 102 is of the STM32MCU^{®} series and the block 104 of the ST25R3911^{®} series.

In an example, the block 104, is a reader integrated circuit (Reader IC), for example an integrated NFC initiator, or a high frequency reader integrated circuit. The block 104 for example generates the necessary physical, i.e. electrical, signal to transport the information signal through the air with magnetic field as medium. In an example, it includes an analog front end (AFE) and an integrated data framing system for example for norms ISO 18092 (NFCIP-1) initiator, ISO 18092 (NFCIP-1) active target, ISO 14443A and B reader (including high bit rates), ISO 15693 reader and FeliCa^{™} reader.

In an example, the block 104 contains a low power capacitive sensor that can be used to detect the presence of a card without switching on the reader field. The presence of a card can also be detected by performing a measurement of amplitude or phase of signal on an antenna LC tank, and comparing it to a stored reference. In an example, it also contains a low power RC oscillator and wake-up timer that can be used to wake up the system after a defined time period, and to check for the presence of a tag using one or more low power detection techniques (capacitive, phase or amplitude).

In an example, the block 104 comprises an electromagnetic compatibility filter (EMC), also called EMI (Electromagnetic interference) filter, comprising inductances and capacitors.

Optionally, the block 104 comprises a matching circuit.

In the given example, two antennae 110, 111 are coupled to an antenna selector 106 (ANTENNA SELECTOR). The antenna selector 106 is coupled to the block 104 output. In an example, the antenna selector 106 is configured to receive the differential NFC signal from the NFC signal provider 104 and select one of the two antennae 110, 111 from which the signal is transmitted or from which a signal is received.

In the case where the antenna selector 106 comprises a general matrix integrated circuit, e.g. a multiplexer or relays, the number of antennae possibly selected is limited to two due to increasing complexity for larger number of antennae.

In order to overcome these drawbacks, the embodiments provide an NFC circuit switch comprising:
- an antenna matching circuit having a first and a second output nodes configured to be coupled to an antenna;
- a first transistor coupling a first NFC signal input node and the matching circuit;
- a second transistor coupling a second NFC signal input node and the matching circuit;

a controlling node of the first and second transistors being coupled together to a first node, the first node being coupled to a first voltage rail via a first resistor; and
   - a third transistor coupling the first node to ground;
the first voltage absolute value being superior to a maximum voltage present between first and second NFC signal input nodes added to the threshold voltage of the first or second transistors.

This solution allows a reduction of the crosstalk created by parasitic transistor capacities.

It also improves the switching factor, otherwise said the commutation speed, of the first and second transistors by speeding up their gate charging and discharging.

Moreover, as a consequence, the antenna selection and the antenna switching speed, are greatly improved as compared to the general matrix integrated circuit solutions.

This solution provides a voltage controlled MOS transistor that has a lower impedance as compared to multiplexing ICs and is faster than relay switches. It also consumes no power during on or off states but only during gate charging and discharging. Thanks to the discrete setup, more freedom and space for antennae placement is given as compared to a star-like form of a centred multiplexing IC.

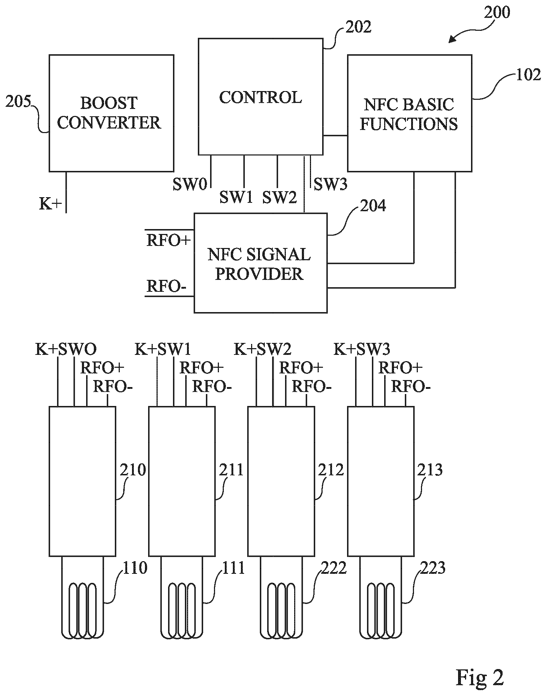

Figure 2 represents schematically blocks of an NFC system 200 according to an embodiment.

The example of Figure 2 comprises the block 102 which is coupled to a block 204 for example similar to the block 104. In an example, the block 204 does not comprise a matching circuit. The block 204 has for example two NFC nodes RFO+ and RFO-. The signal between these two NFC nodes defines for example a differential NFC signal to be transmitted by an antenna or a received signal.

In an example, blocks 102 and 204 are integrated in a same circuit, for example an NFC controller.

The example of Figure 2 further comprises four antennae 110, 111, 222, 223 each coupled to a different NFC circuit switch numbered respectively 210, 211, 212, 213. Even if, in the represented example, only four antennae are implemented, the number of antennae can be for example from 1 included up to 64 included. In an example, one NFC circuit switch is implemented per antennae so the number of NFC circuit switches can be for example ranging from 1 included up to 64 included, for example equal or over 3.

In an example, the antennae are arranged in a matrix. This allows to provide indication of the location of a nearby external tag.

Each NFC circuit switch 210, 211, 212, 213 is coupled to the two NFC nodes of the block 204 (RFO+, RFO-) and is configured to stop or forward the differential NFC signal to, or from, the antenna to which it is coupled.

The system 200 of Figure 2 further comprises a control circuit 202 (CONTROL) which is configured to provide switch control signals SW0, SW1, SW2, SW3 configured to control, each, one of the NFC circuit switches 210, 211, 212, 213. Even if, in this example, the number of switch control signals is four, if the number of NFC circuits switches is different from four, then the number of switch control signals is modified accordingly to fit the number of switches to control. For example, the control circuit 202 is a microcontroller having GPIO pins providing the switch control signals SW0, SW1, SW2, SW3.

For example, blocks 102, 204 and 202 are coupled, for example to synchronize the NFC signal management and the antennae switching.

In the illustrated example, the NFC system 200 further comprises a voltage supplier 205 (BOOST CONVERTER) configured to supply a first clamping voltage K+ to a first voltage rail alternatively called a switching port.

For example, the voltage supplier may comprise either a boost converter or a voltage doubling circuit.

The first voltage K+ absolute value is for example high enough to be able to clamp gates of transistors processing the NFC signal. In an example, the first voltage absolute value is superior to a maximum voltage present between first and second NFC nodes (RFO+, RFO-) added to the threshold voltage of a MOS transistor of the NFC circuit switch 210, 211, 212, 213. In an example, the maximum voltage present between first and second NFC nodes RFO+, RFO- is around 5 V and the first voltage K+ absolute value is above the maximum voltage between RFO+ and RFO- plus the threshold voltage of a transistor, preferably between 7 V included to 20 V included. In the case where the first and second transistors Q1, Q5 are NMOS transistors, the first voltage K+ is positive and for example equal or above +7 V, preferably above +10 V, for example +12 V or +20 V. In the case where the first and second transistors Q1, Q5 are PMOS transistors, the first voltage K+ is negative for example below -7 V, preferably below -10 V, for example below -12 V or -20 V.

Each NFC circuit switch 210, 211, 212, 213 is coupled to the first voltage K+ rail.

An advantage of the presented examples is that the functional multiplexing is flexible and depends only on the state of the control signals SW0, SW1, SW2, SW3.

The exposed solution is also bringing costs down thanks to the use of only one NFC controller for up to 64 antennae for example. The maximum antennae number depends for example on their impedance value and on the EMC filter value. For example, the bigger the antennae, the fewer antennae are usable.

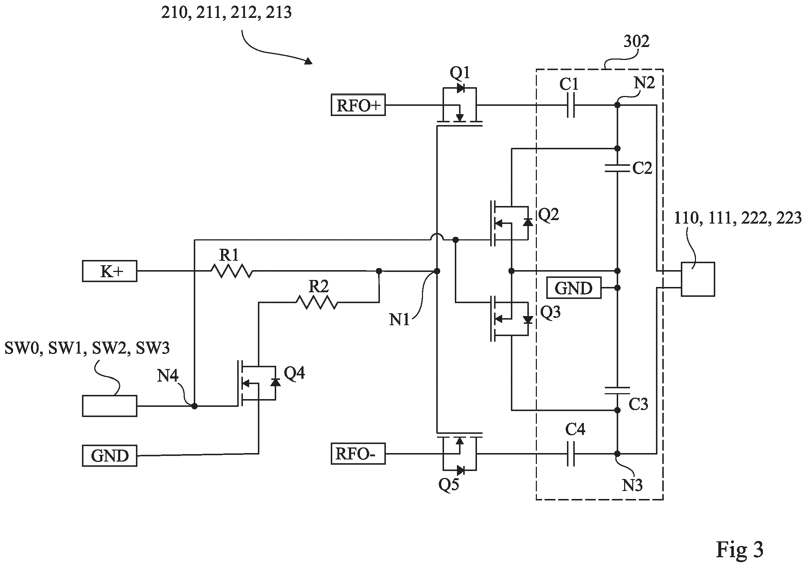

Figure 3 represents a block of the NFC system 200 of Figure 2 according to an embodiment. More particularly, Figure 3 represents an example of one of the NFC circuit switches 210, 211, 212, 213.

In the given example, the NFC circuit switch 210, 211, 212, 213 comprises an antenna matching circuit 302 which has a first and a second nodes N2, N3 configured to be coupled to the respective antenna 110, 111, 222, 223 terminals.

The NFC circuit switch 210, 211, 212, 213 also comprises a first transistor Q1 coupling the first NFC node RFO+ and the matching circuit 302.

The NFC circuit switch 210, 211, 212, 213 further comprises a second transistor Q5 coupling the second NFC node RFO- and the matching circuit 302.

In an example, the first and second transistors Q1, Q5 are MOSFET type transistors, for example NMOS.

The controlling nodes of the first and second transistors Q1, Q5 are coupled together and coupled to a first node N1. The first node N1 is coupled to the first voltage rail K+ via a first resistor R1. This first resistor R1 is configured to prevent shortage, and not to discharge all other connected switching switches 210, 211, 212, 213.

The NFC circuit switch 210, 211, 212, 213 also comprises a third transistor Q4 coupling the first node N1 to ground. The controlling node N4 of the third transistor Q4 is configured to receive the respective control signal SW0, SW1, SW2, SW3.

In an example, an optional second resistor R2 couples the third transistor Q4 to the first node N1 to prevent a parasitic path through the conduction nodes of transistors Q1, Q5 and Q4 and to create a high impedance path.

In a non-illustrated example, the controlling node of the first transistor Q1 is coupled to the first node N1 via a third resistor and the second transistor Q5 is coupled to the first node N1 via a fourth resistor.

The third transistor Q4 is for example a MOS transistor, more particularly an NMOS transistor.

For selecting one antenna, one of the respective control signal SW0, SW1, SW2, SW3 is set to a low state for example around 0 V if the first, second and third transistors are NMOS.

In this case, the third transistor Q4 is in a non-passing state and the gates of the first and second transistors Q1, Q5 are polarized by the first voltage. In an example, the maximum voltage present between the NFC signal input nodes RFO+, RFO- is around 5 V and the first voltage K+ is set above this maximum voltage value added with the threshold voltage of the first or second transistor. In an example, the first voltage K+ is thus set to 7 V, preferably above 10 V, for example 12 V for the gates of transistors Q1 and Q5 to be clamped. In an example the first voltage is up to 20 V included. In this case, transistors Q1 and Q5 are in a passing state and the antenna paths are connected to the RFO+, and respectively RFO-, nodes.

For disconnecting one antenna, one of the respective control signal SW0, SW1, SW2, SW3 is set to a high state, for example above the threshold voltage of the transistor Q4, when the first, second and third transistors are NMOS. In this case, the third transistor Q4 becomes active and the gates of the first and second transistors Q1, Q5 are discharged quickly to ground. At the same time, in a non-illustrated example, the first node N1 is pulled down to ground, and the gate to source voltage of transistors Q1 and Q5 are 0 and -5 V respectively, which is the signal between RFO+ and RFO-. The NFC signal paths between the NFC nodes RFO+, RFO- and the matching circuit 302 then becomes blocked.

Advantageously, the capacity of the EMI LC filter can be provided by the total parasitic source-drain capacities of the MOSFET transistors Q1, Q5.

A such architecture may still undergo residual parasitic crosstalk due to these source-drain parasitic capacities.

In an example, the matching circuit 302 comprises a first capacitor C1 coupling a first conduction node of the first transistor Q1 to the first output node N2. In this example, the matching circuit 302 further comprises a second capacitor C2 coupling the first output node N2 to ground. In the given example, a third capacitor C3 of the matching circuit 302 couples the second output node N3 to ground and a fourth capacitor C4 couples a first conduction node of the second transistor Q5 to the second output node N3.

The matching circuit adapts the impedance of the antenna to the NFC circuitry's output impedance.

In the illustrated example, the NFC circuit switch 210, 211, 212, 213 may optionally comprise a fourth transistor Q2 coupling the first output node N2 to ground and a fifth transistor Q3 coupling the second output node N3 to ground. The controlling nodes of the third, fourth, fifth transistors Q4, Q2, Q3 are coupled together to node N4. In an example, Q2 and Q3 transistors are NMOS transistors. Transistors Q2 and Q3 eliminate completely the residual crosstalk by pushing nodes n2 and N3 to ground.

When the respective control signal SW0, SW1, SW2, SW3 is set to a low state, then the fourth and fifth transistors Q2, Q3 are in a non-passing state.

When the respective control signal SW0, SW1, SW2, SW3 is set to a high state, then the fourth and fifth transistors Q2, Q3 become active. Nodes N2 and N3 are then in turn connected to ground which reduces drastically crosstalk induced by the source-drain capacity of the MOSFET transistors Q1, Q5.

The given solution enables low-cost NFC multiple Card reading or Antenna multiplexing. It may be used for applications such as NFC selective reading places, automotive Wireless solutions or even Game boards, where several NFC Tags can be located in a close vicinity. Storage solutions can also be envisaged by putting tags in different shelves, for example products having tags in supermarkets shelves or on sorting tables.

Various embodiments and variants have been described. Those skilled in the art will understand that certain features of these embodiments can be combined and other variants will readily occur to those skilled in the art. In particular, NMOS transistors can be replaced by PMOS transistors, but in this case, the different voltages K+, control signals SW0, SW1, SW2, SW3, and the NFC signal must be inverted and the first voltage K+ is lower than the minimum NFC signal voltage. In the case of PMOS transistors, K+ can be obtained by using an inverting Buck-boost converter.

Finally, the practical implementation of the embodiments and variants described herein is within the capabilities of those skilled in the art based on the functional description provided hereinabove. In particular, while the disclosed embodiments have been described with two transistors Q1 and Q5 on the antenna paths, it could be applied in a single mode case where only one of the transistors Q1 or Q5 is present or used. In this case, the antenna can be switched or selected, if the voltage K+ is higher than the NFC signal RFO+, RFO- in addition to the threshold voltage of the transistor Q1 or Q5, and if the transistor Q4 is in a non-passing state.

## Claims

1. An NFC circuit switch comprising:
- an antenna matching circuit (302) having a first and a second output nodes (N2, N3) configured to be coupled to an antenna;
- a first transistor (Q1) coupling a first NFC signal input node (RFO+) and the matching circuit;
- a second transistor (Q5) coupling a second NFC signal input node (RFO-) and the matching circuit;
a controlling node of the first and second transistors being coupled together to a first node (N1), the first node being coupled to a first voltage (K+) rail via a first resistor (R1); and
- a third transistor (Q4) coupling the first node to ground;
the first voltage (K+) absolute value being superior to a maximum voltage present between first and second NFC signal input nodes added to the threshold voltage of the first or second transistors.

2. A functioning method of an NFC circuit switch having an antenna matching circuit (302) having a first and a second output nodes (N2, N3) configured to be coupled to an antenna; a first transistor (Q1) coupling a first NFC signal input node (RFO+) and the matching circuit; a second transistor (Q5) coupling a second NFC signal input node (RFO-) and the matching circuit, a controlling node of the first and second transistors being coupled together to a first node (N1), the first node being coupled to a first voltage (K+) rail via a first resistor (R1); and a third transistor (Q4) coupling the first node to ground;
the method comprising applying a first voltage (K+), to the first voltage rail, having an absolute value superior to a maximum voltage present between first and second NFC signal input nodes added to the threshold voltage of the first or second transistors.

3. The switch according to claim 1 or the method according to claim 2, wherein the matching circuit comprises:
- a first capacitor (C1) coupling a first conduction node of the first transistor (Q1) to the first output node;
- a second capacitor (C2) coupling the first output node to ground;
- a third capacitor (C3) coupling the second output node to ground; and
- a fourth capacitor (C4) coupling a first conduction node of the second transistor (Q5) to the second output node.

4. The switch according to claim 1 or 3, or the method according to claim 2 or 3, comprising:
- a fourth transistor (Q2) coupling the first output node of the matching circuit to ground;
- a fifth transistor (Q3) coupling the second output node of the matching circuit to ground;
a controlling node of the third, fourth, fifth transistors being coupled together.

5. The switch according to any of claim 1 or 3 or 4, or the method according to claim 2 to 4, wherein the maximum voltage present between first and second NFC signal input nodes (RFO+, RFO-) is around 5 V and the first voltage (K+) is above 7 V, preferably above 10 V, for example 12 V.

6. The switch to any of claim 1 or 3 to 5, or the method according to claim 2 to 5, wherein the first and second transistors (Q1, Q5) are NMOS transistors.

7. The switch or the method according to any of claims 4 to 6, wherein the third, fourth and fifth transistors (Q4, Q2, Q3) are NMOS transistors.

8. The switch to any of claim 1 or 3 to 7, or the method according to claim 2 to 7, wherein a second resistor (R2) couples the third transistor (Q4) to the first node.

9. The switch to any of claim 1 or 3 to 8, or the method according to claim 2 to 8, wherein the controlling node of the first transistor (Q1) is coupled to the first node via a third resistor.

10. The switch to any of claim 1 or 3 to 9, or the method according to claim 2 to 9, wherein the controlling node of the second transistor (Q5) is coupled to the first node via a fourth resistor.

11. NFC device comprising:
- one switch (210, 211, 212, 213) according to anyone of claims 1 or 3 to 10;
- one antenna (110, 111, 222, 223) coupled to the first and second output nodes (N2, N3) of the matching circuit (302) of said switch;
- one voltage supplier (205) configured to supply the first voltage (K+) to the first voltage rail;
- one NFC controller (204) configured to supply an NFC signal between the first and second NFC signal input nodes (RFO+, RFO-); and
- one switch controller (202) configured to generate a controlling signal (SW+) on the controlling node of the third transistor (Q4).

12. The device according to the preceding claim, wherein the voltage supplier (205) is a boost converter or a voltage doubling circuit.

13. NFC system comprising:
- a plurality of switches according to anyone of the claims 1 or 3 to 10;
- a plurality of antennae, each antenna being coupled to the first and second output nodes of the matching circuit of a different switch of the plurality;
- one voltage supplier configured to supply the first voltage (K+) to the first voltage rail;
- one NFC controller configured to supply an NFC signal between the first and second NFC signal input nodes (RFO+, RFO-) of each switches of the plurality ; and
- one switch controller configured to generate respective controlling signals (SW0, SW1, SW2, SW3) on the controlling node of the third transistor of each switches of the plurality.

14. NFC system according to the preceding claim, wherein the number of antennae and switches of the pluralities is superior to 2 and up to 64.

15. NFC system according to the claim 13 or 14, wherein the antennae are arranged in a matrix.

16. Method of use of a switch according to any of the claims 1 or 3 to 10, comprising applying the first voltage (K+) to the first voltage rail and controlling the third transistor for it to be in a conductive state, in order to force the first and second transistors to be in a conducting state.

## Amended claims

### Amended claims in accordance with Rule 137(2) EPC.

1. An NFC antenna selector comprising:
- an antenna matching circuit (302) having a first and a second output nodes (N2, N3) configured to be coupled to an antenna;
- a first transistor (Q1) coupling, in series, a first NFC signal input node (RFO+) and the matching circuit;
- a second transistor (Q5) coupling, in series, a second NFC signal input node (RFO-) and the matching circuit;
a controlling node of the first and second transistors being coupled together to a first node (N1), the first node being coupled to a first voltage (K+) rail via a first resistor (R1); and
- a third transistor (Q4) coupling the first node to ground;
the first voltage (K+) absolute value being superior to a maximum voltage present between first and second NFC signal input nodes added to the threshold voltage of the first or second transistors.

2. A functioning method of an NFC antenna selector having an antenna matching circuit (302) having a first and a second output nodes (N2, N3) configured to be coupled to an antenna; a first transistor (Q1) coupling, in series, a first NFC signal input node (RFO+) and the matching circuit; a second transistor (Q5) coupling, in series, a second NFC signal input node (RFO-) and the matching circuit, a controlling node of the first and second transistors being coupled together to a first node (N1), the first node being coupled to a first voltage (K+) rail via a first resistor (R1); and a third transistor (Q4) coupling the first node to ground;
the method comprising applying a first voltage (K+), to the first voltage rail, having an absolute value superior to a maximum voltage present between first and second NFC signal input nodes added to the threshold voltage of the first or second transistors.

3. The selector according to claim 1 or the method according to claim 2, wherein the matching circuit comprises:
- a first capacitor (C1) coupling a first conduction node of the first transistor (Q1) to the first output node;
- a second capacitor (C2) coupling the first output node to ground;
- a third capacitor (C3) coupling the second output node to ground; and
- a fourth capacitor (C4) coupling a first conduction node of the second transistor (Q5) to the second output node.

4. The selector according to claim 1 or 3, or the method according to claim 2 or 3, comprising:
- a fourth transistor (Q2) coupling the first output node of the matching circuit to ground;
- a fifth transistor (Q3) coupling the second output node of the matching circuit to ground;
a controlling node of the third, fourth, fifth transistors being coupled together.

5. The selector according to any of claim 1 or 3 or 4, or the method according to claim 2 to 4, wherein the maximum voltage present between first and second NFC signal input nodes (RFO+, RFO-) is around 5 V and the first voltage (K+) is above 7 V, preferably above 10 V, for example 12 V.

6. The selector according to any of claim 1 or 3 to 5, or the method according to claim 2 to 5, wherein the first and second transistors (Q1, Q5) are NMOS transistors.

7. The selector or the method according to any of claims 4 to 6, wherein the third, fourth and fifth transistors (Q4, Q2, Q3) are NMOS transistors.

8. The selector to any of claim 1 or 3 to 7, or the method according to claim 2 to 7, wherein a second resistor (R2) couples the third transistor (Q4) to the first node.

9. The selector according to any of claim 1 or 3 to 8, or the method according to claim 2 to 8, wherein the controlling node of the first transistor (Q1) is coupled to the first node via a third resistor.

10. The selector according to any of claim 1 or 3 to 9, or the method according to claim 2 to 9, wherein the controlling node of the second transistor (Q5) is coupled to the first node via a fourth resistor.

11. NFC device comprising:
- one selector (210, 211, 212, 213) according to anyone of claims 1 or 3 to 10;
- one antenna (110, 111, 222, 223) coupled to the first and second output nodes (N2, N3) of the matching circuit (302) of said selector;
- one voltage supplier (205) configured to supply the first voltage (K+) to the first voltage rail;
- one NFC controller (204) configured to supply an NFC signal between the first and second NFC signal input nodes (RFO+, RFO-); and
- one selector controller (202) configured to generate a controlling signal (SW+) on the controlling node of the third transistor (Q4).

12. The device according to the preceding claim, wherein the voltage supplier (205) is a boost converter or a voltage doubling circuit.

13. NFC system comprising:
- a plurality of selectors according to anyone of the claims 1 or 3 to 10;
- a plurality of antennae, each antenna being coupled to the first and second output nodes of the matching circuit of a different selector of the plurality;
- one voltage supplier configured to supply the first voltage (K+) to the first voltage rail;
- one NFC controller configured to supply an NFC signal between the first and second NFC signal input nodes (RFO+, RFO-) of each selectors of the plurality; and
- one selector controller configured to generate respective controlling signals (SW0, SW1, SW2, SW3) on the controlling node of the third transistor of each selectors of the plurality.

14. NFC system according to the preceding claim, wherein the number of antennae and selectors of the pluralities is superior to 2 and up to 64.

15. NFC system according to the claim 13 or 14, wherein the antennae are arranged in a matrix.
